# EUROPEAN PATENT APPLICATION

(11) **EP 4 280 207 A1**
(43) Date of publication of application: **22.11.2023**
(21) Application number: 22756128.9
(22) Date of filing: 14.02.2022
(51) Int. Cl.: G10K 11/16, G10K 11/168, B32B 7/02, B32B 7/027, B32B 3/26, B32B 3/28, B32B 3/30

(54) **PANEL STRUCTURE**

(30) Priority: 17.02.2021 JP 2021023583; 19.05.2021 JP 2021084630
(71) Applicant: Mitsubishi Heavy Industries, Ltd., Tokyo 100-8332 (JP); Mitsubishi Heavy Industries Machinery Systems, Ltd., Kobe-shi, Hyogo 652-8585 (JP)
(72) Inventor: KOYAMA, Takayuki, Tokyo 100-8332 (JP); TAKAGI, Kiyoka, Tokyo 100-8332 (JP); SENNYU, Katsuya, Kobe-shi, Hyogo 652-8585 (JP); TAKAKUWA, Yoshinao, Kobe-shi, Hyogo 652-8585 (JP); MIYAKE, Takayuki, Kobe-shi, Hyogo 652-8585 (JP); AIKAWA, Katsuhide, Kobe-shi, Hyogo 652-8585 (JP)
(74) Representative: Hoffmann Eitle
(86) International application number: PCT/JP2022/005714
(87) International publication number: WO 2022/176810

(57) **Abstract**

A panel structure comprising: a sheet-shaped core member having a thermoplastic property and provided with a plurality of protruding portions in at least one surface; a sheet-shaped faceplate having a thermoplastic property and disposed on the plurality of protruding portions; and a fusing portion which is selectively formed between the core member and the plurality of protruding portions and which bonds the core member and the faceplate to each other.

## Description

### Technical Field

The present disclosure relates to a panel structure.

### Background Art

For vehicles such as automobiles, trains, or other mobility vehicles, a sandwich panel having high stiffness is used (for example, PTL 1).

### Citation List

### Patent Literature

[PTL 1] Japanese Unexamined Patent Application Publication No. 2003-053887

### Summary of Invention

### Technical Problem

Typically, the sandwich panel is configured by disposing a core member between two faceplates and joining the two faceplates and the core member using an adhesive agent. However, in the joining using the adhesive agent, adhesion failure between the faceplates and the core member may occur. When the faceplates and the core member are joined using a bolt or the like in order to increase the adhesion strength or to improve the adhesion reliability, it is necessary to form a hole for joining in the faceplates and the core member. Therefore, the mechanical strength of the sandwich panel may decrease, which is more significant when the material is a fiberreinforced resin. In addition, when the faceplates and the core member are joined using a bolt or the like, the weight increases, and the manufacturing process of the sandwich panel may also be complicated.

An object of the present disclosure is to provide a panel structure capable of improving reliability of joining between a faceplate and a core member.

### Solution to Problem

A panel structure according to one aspect of the present disclosure includes: a sheet-shaped core member that has a thermoplastic property and includes a plurality of protruding portions on at least one surface; a sheet-shaped faceplate that is disposed on the plurality of protruding portions and has a thermoplastic property; and a fusing portion that is selectively formed between the faceplate and the plurality of protruding portions and joins the faceplate and the core member to each other. Advantageous Effects of Invention

According to the present disclosure, the reliability of joining between the faceplate the core member can be improved.

### Brief Description of Drawings

Fig. 1 is a diagram schematically showing a cross-section of a panel structure according to a first embodiment.
Fig. 2 is a diagram schematically showing a core member according to the first embodiment.
Fig. 3 is a diagram schematically showing a cross-section of a panel structure according to a second embodiment.
Fig. 4 is a diagram schematically showing a core member according to the second embodiment.
Fig. 5 is a diagram schematically showing a cross-section of a panel structure according to a third embodiment.
Fig. 6 is a diagram schematically showing a core member according to the third embodiment.
Fig. 7 is a diagram schematically showing a cross-section of a panel structure according to a fourth embodiment.
Fig. 8 is a diagram schematically showing a cross-section of a panel structure according to a fifth embodiment.
Fig. 9 is a diagram schematically showing a cross-section of a panel structure according to a sixth embodiment.
Fig. 10 is a diagram schematically showing a cross-section of a panel structure according to a modification example of the sixth embodiment.
Fig. 11 is a diagram schematically showing a cross-section of a panel structure according to a seventh embodiment.
Fig. 12 is a diagram schematically showing a cross-section of a panel structure according to a modification example of the seventh embodiment.
Fig. 13 is a diagram schematically showing a cross-section of a panel structure according to an eighth embodiment.
Fig. 14 is a diagram schematically showing a cross-section of a panel structure according to a ninth embodiment.
Fig. 15 is a diagram schematically showing a cross-section of a panel structure according to a tenth embodiment.
Fig. 16 is a diagram schematically showing a cross-section of a panel structure according to an eleventh embodiment.

### Description of Embodiments

Hereinafter, an embodiment of the present invention will be described in detail with reference to the accompanying drawings. The present invention is not limited to this embodiment. In addition, when a plurality of embodiments are provided, the present invention also includes a combination of two or more of the embodiments. In addition, in the following embodiments, the same components will be represented by the same reference numerals, and the description thereof will not be repeated.

### [First Embodiment]

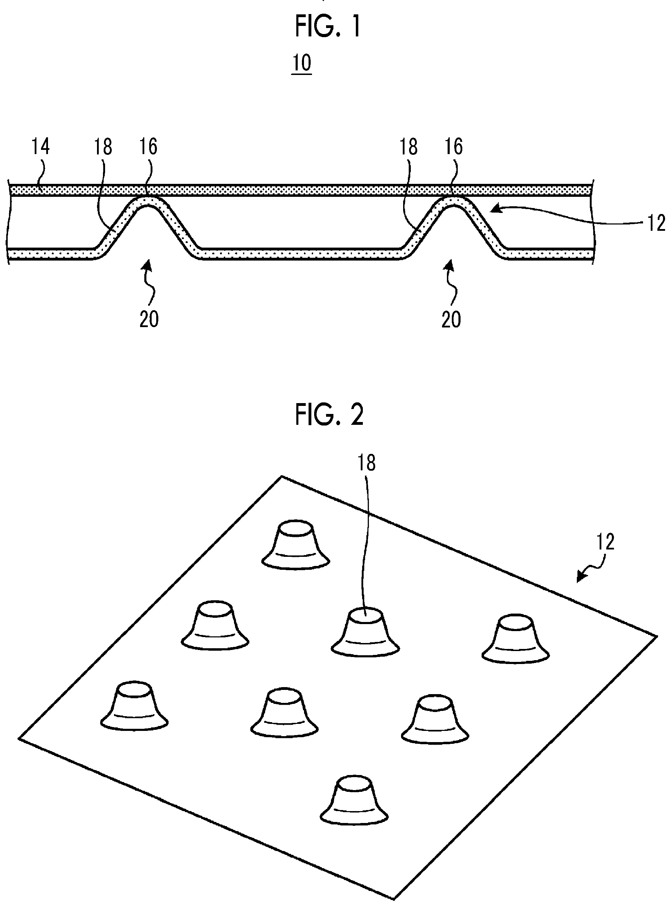

A configuration of a panel structure according to a first embodiment will be described using Figs. 1 and 2. Fig. 1 is a diagram schematically showing a cross-section of the panel structure according to the first embodiment. Fig. 2 is a diagram schematically showing a core member according to the first embodiment. The panel structure according to the present disclosure is applicable to, for example, automobiles, trains, other mobility vehicles, and buildings.

As shown in Fig. 1, a panel structure 10 includes a core member 12, a faceplate 14, and a fusing portion 16.

The core member 12 has a thermoplastic property. The core member 12 is formed in a sheet shape using a thermoplastic resin. Examples of the thermoplastic resin include a polyamide resin, a polypropylene resin, an ABS resin, polyether ether ketone, polyether ketone ketone, and polyphenylene sulfide. However, the present disclosure is not limited to this example. The thermoplastic resin is preferably a thermoplastic fiber reinforced plastic (FRP) including a reinforced fiber. The fiber reinforced plastic is, for example, preferably a glass fiber reinforced plastic (GFRP) or a carbon fiber reinforced plastic (CFRP). The fiber reinforced plastic is not limited to the examples. The core member 12 includes a plurality of protruding portions 18 on one surface. The core member 12 includes recessed portions 20 at positions corresponding to the protruding portions 18 on another surface. As shown in Fig. 2, the plurality of protruding portions 18 are formed on the one surface of the core member 12.

For example, in order to improve heat insulating properties of the panel structure 10, it is preferable that the core member 12 is formed of a material having a low thermal conductivity. In this case, the core member 12 may be formed of, for example, a carbon fiber reinforced plastic a glass fiber reinforced plastic, a mixture of a glass fiber reinforced plastic and a carbon fiber reinforced plastic, or a short carbon fiber reinforced plastic having a low thermal conductivity.

The faceplate 14 is disposed on the one surface of the core member 12. The faceplate 14 is disposed on the protruding portions 18 of the one surface of the core member 12. The faceplate 14 has a thermoplastic property. The faceplate 14 is formed in a sheet shape using a thermoplastic resin. Examples of the thermoplastic resin include a polyamide resin, a polypropylene resin, an ABS resin, polyether ether ketone, polyether ketone ketone, and polyphenylene sulfide. However, the present disclosure is not limited to this example. The thermoplastic resin is preferably a thermoplastic fiber reinforced plastic including a reinforced fiber. The fiber reinforced plastic is, for example, preferably a glass fiber reinforced plastic or a carbon fiber reinforced plastic. The fiber reinforced plastic is not limited to the examples. The core member 12 and the faceplate 14 may be formed of the same material or may be formed of different materials. For example, in the embodiment, the core member 12 may be formed of a typical thermoplastic resin, and the faceplate 14 may be formed of a thermoplastic fiber reinforced plastic. In addition, the core member 12 may be formed of a thermoplastic fiber reinforced plastic, and the faceplate 14 may be formed of a typical thermoplastic resin. In addition, the core member 12 and the faceplate 14 may be formed of different kinds of thermoplastic resins. For example, in the embodiment, the core member 12 may be formed of a polyamide resin, and the faceplate 14 may be formed of a polypropylene resin.

The fusing portion 16 joins the core member 12 and the faceplate 14 to each other. The fusing portion 16 is formed between a top portion of the protruding portion 18 and one surface of the faceplate 14. The fusing portion 16 is selectively formed between each of the top portions of the plurality of protruding portions 18 and the one surface of the faceplate 14. The fusing portion 16 is selectively formed between each of the top portions of the plurality of protruding portions 18 and the one surface of the faceplate 14, for example, depending on stiffness and impact resistance required for the panel structure 10. The fusing portion 16 can be formed by heating and fusing joints of the top portions of the protruding portions 18 and the faceplate 14 and disposing and cooling the faceplate 14. For the heating, for example, a heat source such as a heater or a heating wire, ultrasonic vibration, electromagnetic induction using a magnetic field, or a laser can be used. However, the present disclosure is not limited to these methods.

In the panel structure 10 according to the first embodiment, the core member 12 and the faceplate 14 are joined through the fusing portions 16. As a result, the reliability of joining between the core member 12 and the faceplate 14 can be improved.

### [Second Embodiment]

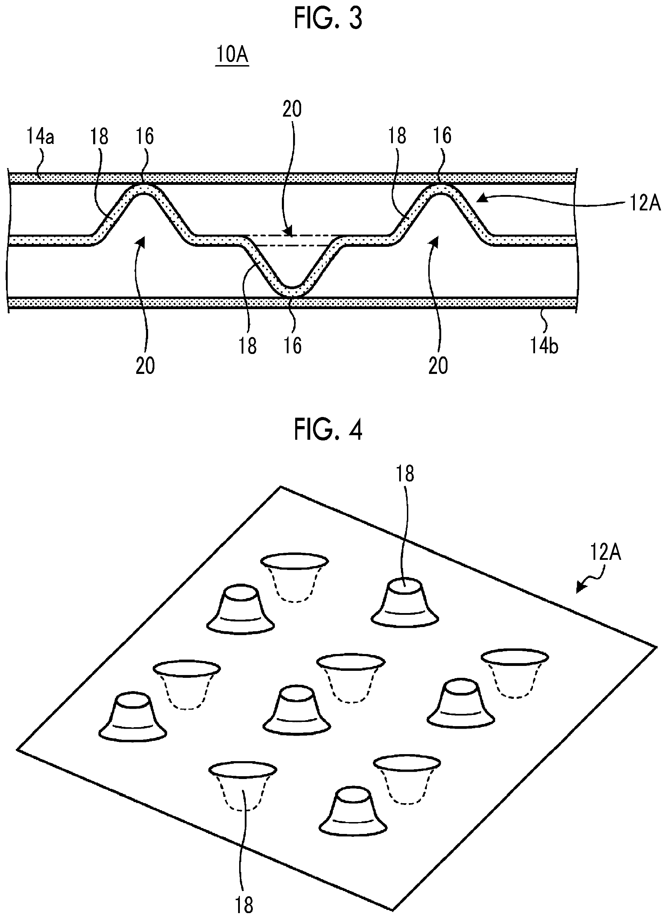

A configuration of a panel structure according to a second embodiment will be described using Figs. 3 and 4. Fig. 3 is a diagram schematically showing a cross-section of the panel structure according to the second embodiment. Fig. 4 is a diagram schematically showing a core member according to the second embodiment.

As shown in Fig. 3, a panel structure 10A includes a core member 12A, a faceplate 14a, a faceplate 14b, and the fusing portions 16. The panel structure 10A includes the faceplate on each of both of surfaces of the core member 12A.

The core member 12A is different from the core member 12 shown in Fig. 1 in that the protruding portions 18 are provided on both of the surfaces. The core member 12A includes recessed portions 20 at positions corresponding to the protruding portions 18 on both of the surfaces. As shown in Fig. 3, the core member 12A includes the plurality of protruding portions 18 and the plurality of recessed portions 20 on both of the surfaces.

The faceplate 14a is disposed on one surface of the core member 12A. The faceplate 14a is disposed on the protruding portions 18 of the one surface of the core member 12A. The faceplate 14b is disposed on the other surface of the core member 12A. The faceplate 14b is disposed on the protruding portions 18 of the other surface of the core member 12A. The panel structure 10A includes an air layer between the core member 12A and the faceplate 14a. The panel structure 10A includes an air layer between the core member 12A and the faceplate 14b.

The fusing portions 16 join the core member 12A and the faceplate 14a on the one surface of the core member 12A. The fusing portion 16 is formed between a top portion of the protruding portion 18 and one surface of the faceplate 14a. The fusing portion 16 is selectively formed between each of the top portions of the plurality of protruding portions 18 and the one surface of the faceplate 14a. The fusing portion 16 is selectively formed between each of the top portions of the plurality of protruding portions 18 and the one surface of the faceplate 14a, for example, depending on stiffness and impact resistance required for the panel structure 10A. The fusing portion 16 can be formed by heating and fusing joints of the top portions of the protruding portions 18 and the faceplate 14a and disposing and cooling the faceplate 14a.

The fusing portions 16 join the core member 12A and the faceplate 14b on the other surface of the core member 12A. The fusing portion 16 is formed between a top portion of the protruding portion 18 and one surface of the faceplate 14b. The fusing portion 16 is selectively formed between each of the top portions of the plurality of protruding portions 18 and the one surface of the faceplate 14b. The fusing portion 16 is selectively formed between each of the top portions of the plurality of protruding portions 18 and the one surface of the faceplate 14b, for example, depending on stiffness and impact resistance required for the panel structure 10A. The fusing portion 16 can be formed by heating and fusing joints of the top portions of the protruding portions 18 and the faceplate 14b and disposing and cooling the faceplate 14b.

In the panel structure 10A according to the second embodiment, the core member 12A is joined to the faceplate 14a and the faceplate 14b through the fusing portions 16. As a result, in the second embodiment, the reliability of joining between the core member 12A and the faceplate 14a and the faceplate 14b can be improved. In addition, in the panel structure 10A according to the second embodiment, the core member 12A is joined to the faceplate 14a and the faceplate 14b through the fusing portions 16. As a result, a joining member such as a bolt is unnecessary, and an increase in weight can be suppressed.

### [Third Embodiment]

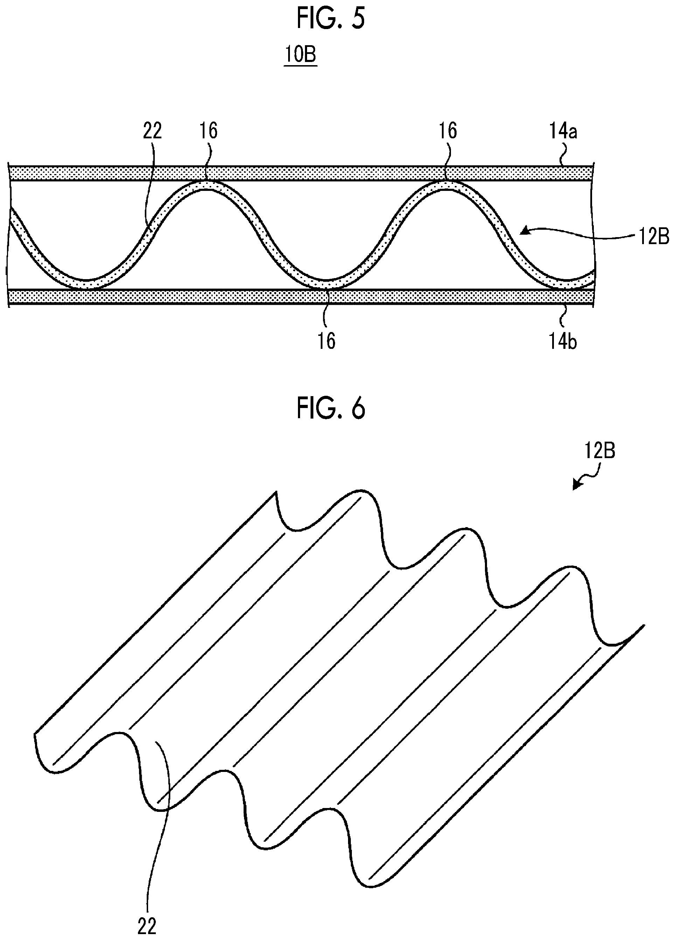

A configuration of a panel structure according to a third embodiment will be described using Figs. 5 and 6. Fig. 5 is a diagram schematically showing a cross-section of the panel structure according to the third embodiment. Fig. 6 is a diagram schematically showing a core member according to the third embodiment.

As shown in Fig. 5, a panel structure 10B includes a core member 12B, the faceplate 14a, the faceplate 14b, and the fusing portions 16.

The core member 12B is different from the core member 12 shown in Fig. 1 in that corrugated portions 22 are provided. As shown in Fig. 6, the core member 12B is formed in a wave shape and includes the plurality of corrugated portions 22. The wave shape can also be referred to as a corrugated shape. The corrugated portion 22 is one kind of the protruding portion 18 and the recessed portion 20. The panel structure 10B includes an air layer between the core member 12B and the faceplate 14a. The panel structure 10B includes an air layer between the core member 12B and the faceplate 14b.

The fusing portions 16 join the core member 12B and the faceplate 14a on one surface of the core member 12B. The fusing portion 16 is formed between a top portion of the corrugated portion 22 and the one surface of the faceplate 14a. The fusing portion 16 is selectively formed between each of the top portions of the plurality of corrugated portions 22 and the one surface of the faceplate 14a. The fusing portion 16 is selectively formed between each of the top portions of the plurality of corrugated portions 22 and the one surface of the faceplate 14a, for example, depending on stiffness and impact resistance required for the panel structure 10B. The fusing portion 16 can be formed by heating and fusing joints of the top portions of the corrugated portion 22 and the faceplate 14a and disposing and cooling the faceplate 14a.

The fusing portions 16 join the core member 12B and the faceplate 14b on the other surface of the core member 12B. The fusing portion 16 is formed between the top portion of the corrugated portion 22 and the one surface of the faceplate 14b. The fusing portion 16 is selectively formed between each of the top portions of the plurality of corrugated portions 22 and the one surface of the faceplate 14b. The fusing portion 16 is selectively formed between each of the top portions of the plurality of corrugated portions 22 and the one surface of the faceplate 14b, for example, depending on stiffness and impact resistance required for the panel structure 10B. The fusing portion 16 can be formed by heating and fusing joints of the top portions of the corrugated portion 22 and the faceplate 14b and disposing and cooling the faceplate 14b.

In the panel structure 10B according to the third embodiment, the core member 12B is joined to the faceplate 14a and the faceplate 14b through the fusing portions 16. As a result, in the third embodiment, the reliability of joining between the core member 12B and the faceplate 14a and the faceplate 14b can be improved. In addition, in the panel structure 10B according to the third embodiment, the core member 12B is joined to the faceplate 14a and the faceplate 14b through the fusing portions 16. As a result, a joining member such as a bolt is unnecessary, and an increase in weight can be suppressed.

### [Fourth Embodiment]

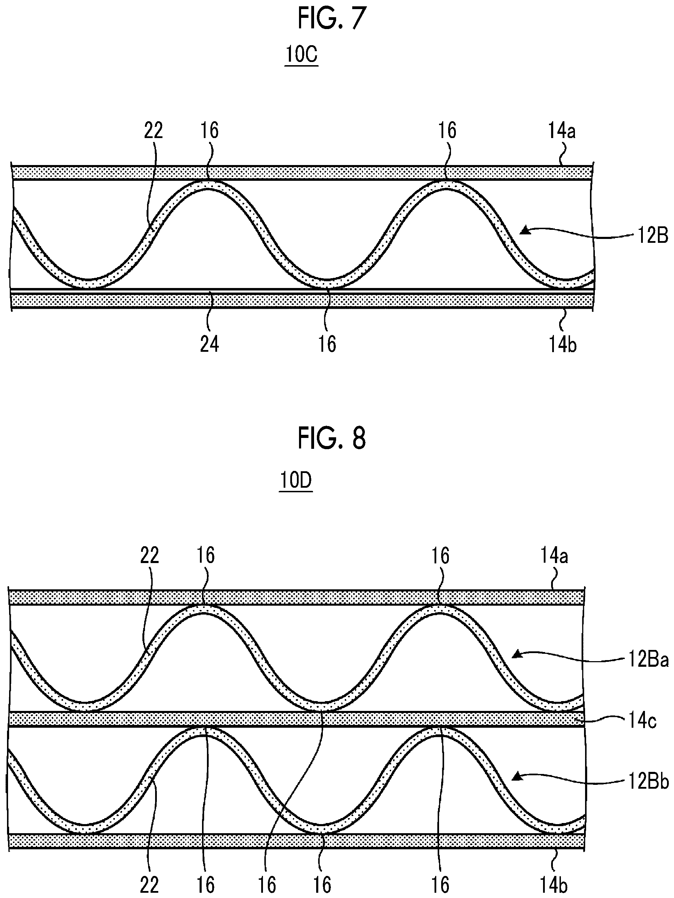

A configuration of a panel structure according to a fourth embodiment will be described using Fig. 7. Fig. 7 is a diagram schematically showing a cross-section of the panel structure according to the fourth embodiment.

As shown in Fig. 7, a panel structure 10C according to a fourth embodiment includes the core member 12B, the faceplate 14a, the faceplate 14b, the fusing portions 16, and a metal thin film 24. The panel structure 10C is different from the panel structure 10B shown in Fig. 5 in that the metal thin film 24 is provided.

In the example shown in Fig. 7, the metal thin film 24 is formed on the one surface of the faceplate 14b. However, the present disclosure is not limited to this example. The metal thin film 24 can be formed on at least one surface of at least one of the faceplate 14a or the faceplate 14b. The metal thin film 24 can be formed, for example by depositing metal on the faceplate 14b or plating the faceplate 14b with metal. The metal thin film 24 may be any metal. The metal thin film 24 may be formed using other methods.

In the panel structure 10C according to the fourth embodiment, the metal thin film 24 is provided on at least one surface of at least one of the faceplate 14a or the faceplate 14b. As a result, in the fourth embodiment, heat of radiation generated from the panel structure 10C can be reduced.

### [Fifth Embodiment]

A configuration of a panel structure according to a fifth embodiment will be described using Fig. 8. Fig. 8 is a diagram schematically showing a cross-section of the panel structure according to the fifth embodiment.

As shown in Fig. 8, a panel structure 10D according to the fifth embodiment includes a core member 12Ba, a core member 12Bb, the faceplate 14a, the faceplate 14b, a faceplate 14c, and the fusing portions 16. The panel structure 10D is different from the panel structure 10B shown in Fig. 5 in that the plurality of core members are provided.

In the embodiment, the fusing portions 16 join the core member 12Ba and the faceplate 14a on one surface of the core member 12Ba. The fusing portions 16 join the core member 12Ba and the faceplate 14c on another surface of the core member 12Ba. The fusing portions 16 join the core member 12Bb and the faceplate 14c on one surface of the core member 12Bb. The fusing portions 16 join the core member 12Bb and the faceplate 14b on another surface of the core member 12Bb. In the example shown in Fig. 8, the core member 12Ba and the core member 12Bb are joined to the single faceplate 14c. However, the present disclosure is not limited to this example. For example, the faceplate 14c may have a structure where two faceplates including a faceplate to which the core member 12Ba is joined and a faceplate to which the core member 12Bb is joined are joined or fused.

The core member 12Ba and the core member 12Bb may be formed such that top portions thereof are aligned with or shifted from each other. The shapes of the core member 12Ba and the core member 12Bb may be different from each other.

The panel structure 10D includes an air layer between the core member 12Ba and the faceplate 14a. The panel structure 10D includes an air layer between the core member 12Ba and the faceplate 14c. The panel structure 10D includes an air layer between the core member 12Bb and the faceplate 14c. The panel structure 10D includes an air layer between the core member 12Bb and the faceplate 14b. That is, the number of the air layers in the panel structure 10D is more than that in the panel structure 10B shown in Fig. 5.

In the panel structure 10D according to the fifth embodiment, the volume of the air layers can be increased by providing the plurality of core members such as the core member 12Ba and the core member 12Bb. As a result, in the fifth embodiment, the heat insulating properties can be improved. In addition, in the fifth embodiment, sound insulating properties can be improved.

### [Sixth Embodiment]

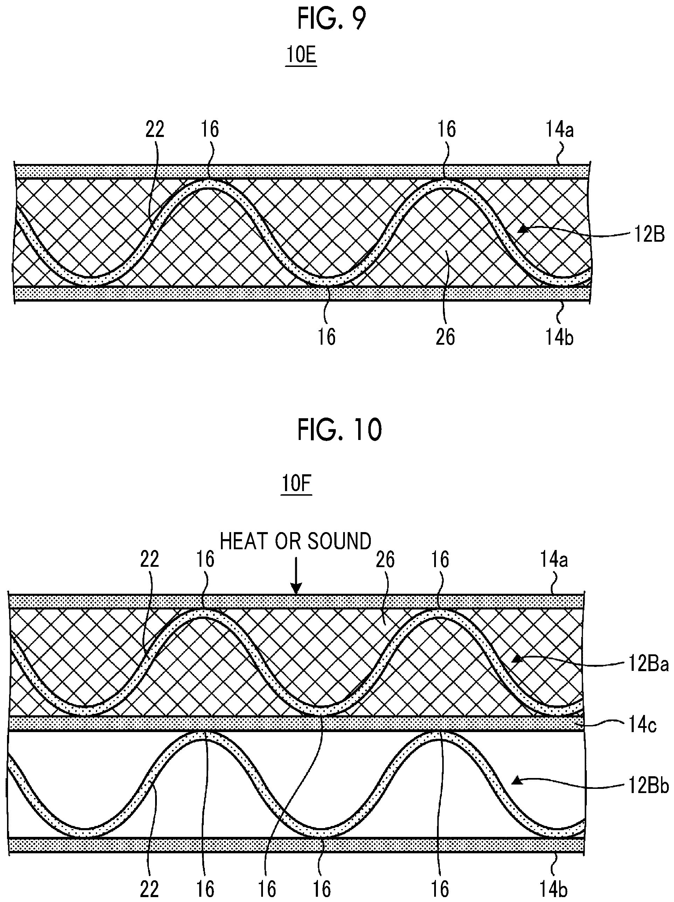

A configuration of a panel structure according to a sixth embodiment will be described using Fig. 9. Fig. 9 is a diagram schematically showing a cross-section of the panel structure according to the sixth embodiment.

As shown in Fig. 9, a panel structure 10E according to the sixth embodiment includes the core member 12B, the faceplate 14a, the faceplate 14b, the fusing portions 16, and a filling member 26. The panel structure 10E is different from the panel structure 10B shown in Fig. 5 in that the filling member 26 is provided.

The filling member 26 is disposed between the core member 12B and each of the faceplate 14a and the faceplate 14b. The filling member 26 may be selectively disposed between the core member 12B and each of the faceplate 14a and the faceplate 14b. The filling member 26 can be formed of, for example, a foaming member, such as foaming urethane, having at least one of heat insulating properties or sound absorbing properties. The filling member 26 is not limited to the foaming member and may be formed of another member having at least either of heat insulating properties or sound absorbing properties.

One example of a method of disposing the filling member 26 between the core member 12B and each of the faceplate 14a and the faceplate 14b will be described. For example, before heat-fusing the core member 12B and each of the faceplate 14a and the faceplate 14b, the filling member 26 is shaped in a predetermined shape and is disposed in a space between the core member 12B and each of the faceplate 14a and the faceplate 14b. The filling member 26 is fused with heat generated during the heat fusion between the core member 12B and each of the faceplate 14a and the faceplate 14b to adhere to the core member 12B and the faceplate 14a and the faceplate 14b. As a result, the filling member 26 is disposed between the core member 12B and each of the faceplate 14a and the faceplate 14b.

The panel structure 10E according to the sixth embodiment includes the filling member 26 between the core member 12B and each of the faceplate 14a and the faceplate 14b. As a result, in the sixth embodiment, the heat insulating properties can be improved. In addition, in the sixth embodiment, sound insulating properties can also be improved.

### [Modification Example of Sixth Embodiment]

A configuration of a panel structure according to a modification example of the sixth embodiment will be described using Fig. 10. Fig. 10 is a diagram schematically showing a cross-section of the panel structure according to the modification example of the sixth embodiment.

As shown in Fig. 10, a panel structure 10F according to the modification example of the sixth embodiment includes the core member 12Ba, the core member 12Bb, the faceplate 14a, the faceplate 14b, the faceplate 14c, the fusing portions 16, and the filling member 26. The panel structure 10F is different from the panel structure 10D shown in Fig. 8 in that the filling member 26 is provided. In the example shown in Fig. 10, the core member 12Ba and the core member 12Bb are joined to the single faceplate 14c. However, the present disclosure is not limited to this example. For example, the faceplate 14c may have a structure where two faceplates including a faceplate to which the core member 12Ba is joined and a faceplate to which the core member 12Bb is joined are joined or fused.

In the example shown in Fig. 10, it is assumed that the panel structure 10F receives heat or a sound from a heat source or a sound source (not shown) from the core member 12Ba side. In this case, it is preferable that the filling member 26 is formed between the core member 12Ba and each of the faceplate 14a and the faceplate 14c. That is, when a plurality of core members are present, it is preferable that the filling member 26 is formed on the heat source side or the sound source side.

In the panel structure 10F according to the modification example of the sixth embodiment, by forming a foaming member between the core member 12Ba and each of the faceplate 14a and the faceplate 14c, heat or a sound can be insulated from the side where heat or a sound is directly received. As a result, in the modification example of the sixth embodiment, the heat insulating properties can be improved. In addition, in the modification example of the sixth embodiment, sound insulating properties can be improved.

### [Seventh Embodiment]

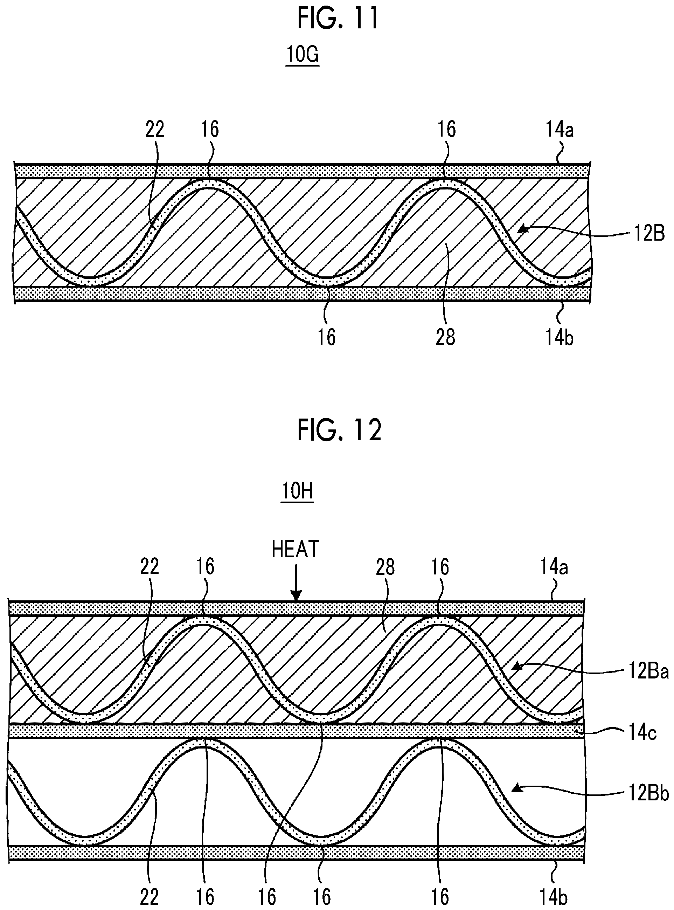

A configuration of a panel structure according to a seventh embodiment will be described using Fig. 11. Fig. 11 is a diagram schematically showing a cross-section of the panel structure according to the seventh embodiment.

As shown in Fig. 11, a panel structure 10G according to the seventh embodiment includes the core member 12B, the faceplate 14a, the faceplate 14b, the fusing portions 16, and a flow path 28. The panel structure 10G is different from the panel structure 10B shown in Fig. 5 in that the flow path 28 is provided.

The flow path 28 is formed between the core member 12B and each of the faceplate 14a and the faceplate 14b. A fluid flows through the flow path 28 between the core member 12B and each of the faceplate 14a and the faceplate 14b. The fluid is, for example, a gas or a liquid. Specifically, the fluid is, for example, air or water, but the present disclosure is not limited thereto. By causing the fluid through the flow path 28 between the core member 12B and each of the faceplate 14a and the faceplate 14b, the panel structure 10G is cooled. Depending on the temperature of the fluid flowing through the flow path 28, for example, when the panel structure 10G is provided in a vehicle, air in an external environment such as the interior of the vehicle is cooled or heated. In other words, in the seventh embodiment, depending on a correlation between the temperature of the fluid flowing through the flow path 28 and the temperature of a temperature control target as a target of which the temperature is to be controlled, the temperature control target can be cooled or heated. For example, in the seventh embodiment, the temperature of the temperature control target may be measured to determine the temperature of the fluid by a feedback control based on the measurement result of the temperature. As a result, in the seventh embodiment, by controlling the temperature of the fluid depending on the temperature of the temperature control target, the temperature control target can be appropriately cooled or heated.

In the seventh embodiment, by causing the fluid to flow through the flow path 28, sound insulating properties may be improved. For example, sound propagation properties change between when the fluid is a gas and when the fluid is a liquid. The sound propagation properties also change depending on physical properties such as the viscosity of the fluid. That is, by selecting a state of the fluid flowing through the flow path 28 and physical properties, sound insulating properties for a sound received by the panel structure 10G from the sound source (not shown) can be improved. In addition, for example, when a frequency band of a sound that is not insulated is previously known, a fluid that can attenuate the sound in the frequency band is selected and is caused to flow through the flow path 28 such that the sound can be effectively attenuated. That is, in the seventh embodiment, by selecting the state of the fluid flowing through the flow path 28 and the physical properties such as viscosity depending on the sound that is received by the panel structure 10G, sound insulating properties can be improved.

In the panel structure 10G according to the seventh embodiment, by causing the fluid to flow between the core member 12B and each of the faceplate 14a and the faceplate 14b, the panel structure 10G can be cooled. As a result, in the seventh embodiment, the heat insulating properties can be improved. In addition, in the seventh embodiment, by causing a fluid having a lower temperature than external heat through the flow path 28, air in an external environment such as the interior of the vehicle can be cooled. Further, in the seventh embodiment, by causing a fluid having a higher temperature than external heat through the flow path 28, air in an external environment such as the interior of the vehicle can be heated.

### [Modification Example of Seventh Embodiment]

A configuration of a panel structure according to a modification example of the seventh embodiment will be described using Fig. 12. Fig. 12 is a diagram schematically showing a cross-section of the panel structure according to the modification example of the seventh embodiment.

As shown in Fig. 12, a panel structure 10H according to the modification example of the seventh embodiment includes the core member 12Ba, the core member 12Bb, the faceplate 14a, the faceplate 14b, the faceplate 14c, the fusing portions 16, and the flow path 28. The panel structure 10H is different from the panel structure 10D shown in Fig. 8 in that the flow path 28 is provided.

In the example shown in Fig. 12, the panel structure 10H receives heat from a heat source (not shown) from the core member 12Ba side. In this case, it is preferable that the flow path 28 is formed between the core member 12Ba and each of the faceplate 14a and the faceplate 14c. That is, when a plurality of core members are present, it is preferable that the flow path 28 is formed on the heat source side.

In the panel structure 10H according to the modification example of the seventh embodiment, by causing the fluid to flow between the core member 12Ba and each of the faceplate 14a and the faceplate 14c, the side where heat is directly received can be cooled. As a result, in the modification example of the seventh embodiment, the heat insulating properties can be improved.

### [Eighth Embodiment]

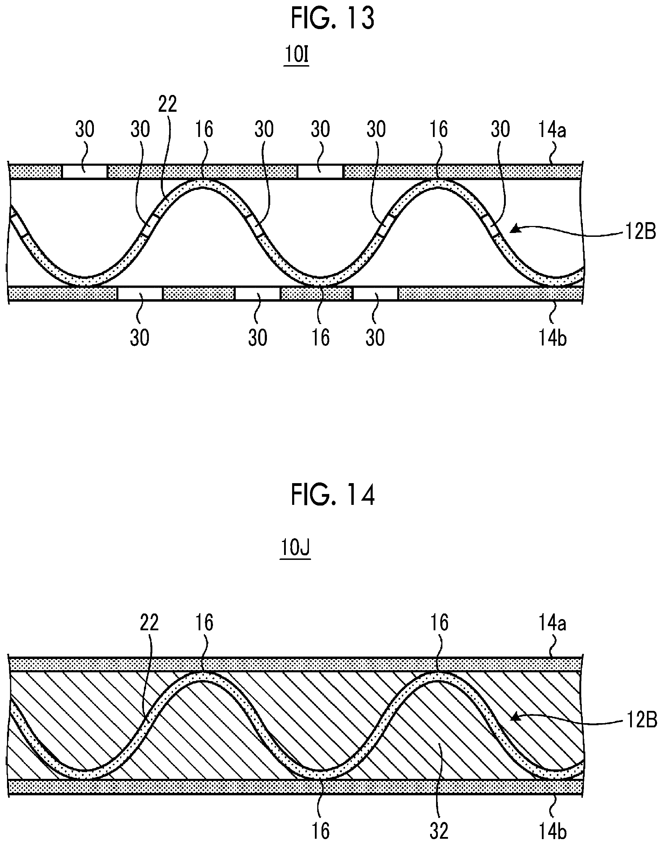

A configuration of a panel structure according to an eighth embodiment will be described using Fig. 13. Fig. 13 is a diagram schematically showing a cross-section of the panel structure according to the eighth embodiment.

As shown in Fig. 13 a panel structure 10I according to the eighth embodiment includes the core member 12B, the faceplate 14a, the faceplate 14b, the fusing portions 16, and a hole portion 30. The panel structure 101 is different from the panel structure 10B shown in Fig. 5 in that the hole portion 30 is provided.

The hole portion 30 can be formed in the core member 12B, the faceplate 14a, and the faceplate 14b. The hole portion 30 can be formed in at least one of the core member 12B, the faceplate 14a, or the faceplate 14b. The panel structure 10I includes the hole portion 30 such that a generated sound can be absorbed by an acoustic resonance effect. The panel structure 10I includes, for example, the hole portion 30 such that the sound is canceled by reflection.

The number of the hole portions 30 and the positions where the hole portion 30 is formed can be freely changed depending on the design. For example, the number of the hole portions 30 and the positions where the hole portion 30 is formed can be freely changed depending on the size of a sound to be absorbed, the frequency of the sound, the range of the sound, and the like. For example, even when a plurality of core members are used, the hole portion 30 may be formed at any position of the plurality of core members and the faceplates.

In the panel structure 10I according to the eighth embodiment, by forming the hole portion 30, a sound generated from the panel structure 10I can be absorbed by an acoustic resonance effect. As a result, in the eighth embodiment, noise generated from one of the faceplate 14a or the faceplate 14b can be prevented from propagating to the other one of the faceplate 14a or the faceplate 14b.

### [Modification Example of Eighth Embodiment]

In the panel structure 10I shown in Fig. 13, at least one of the core member 12B, the faceplate 14a, or the faceplate 14b may be formed of a porous resin or a resin including a non-woven carbon fiber. In this case, it is preferable that the resin is a porous resin or a carbon fiber reinforced plastic including a non-woven carbon fiber. The core member 12B, the faceplate 14a, or the faceplate 14b that is formed of the porous resin or the like includes fine pores. Therefore, by forming the core member 12B, the faceplate 14a, or the faceplate 14b using the porous resin or the like, a sound can be resonated as in the case where the hole portion 30 is formed. In the modification example of the eighth embodiment, the hole portion 30 does not need to be formed.

### [Ninth Embodiment]

A configuration of a panel structure according to a ninth embodiment will be described using Fig. 14. Fig. 14 is a diagram schematically showing a cross-section of the panel structure according to the ninth embodiment.

As shown in Fig. 14, a panel structure 10J according to the ninth embodiment includes the core member 12B, the faceplate 14a, the faceplate 14b, the fusing portions 16, and a sound absorbing member 32. The panel structure 10J is different from the panel structure 10B shown in Fig. 5 in that the sound absorbing member 32 is provided.

The sound absorbing member 32 is disposed between the core member 12B and each of the faceplate 14a and the faceplate 14b. The sound absorbing member 32 may be selectively disposed between the core member 12B and each of the faceplate 14a and the faceplate 14b. The sound absorbing member 32 can be formed of, for example, any member that exhibits a sound absorbing effect.

The panel structure 10J according to the ninth embodiment includes the sound absorbing member 32 between the core member 12B and each of the faceplate 14a and the faceplate 14b. As a result, in the ninth embodiment, sound insulating properties can be improved.

### [Tenth Embodiment]

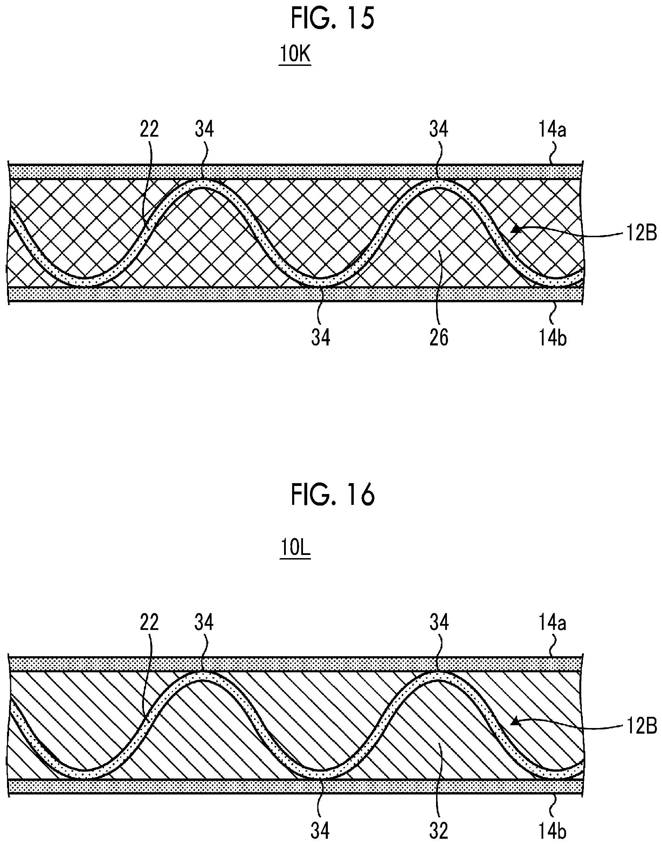

A configuration of a panel structure according to a tenth embodiment will be described using Fig. 15. Fig. 15 is a diagram schematically showing a cross-section of the panel structure according to the tenth embodiment.

As shown in Fig. 15, a panel structure 10K according to the tenth embodiment includes the core member 12B, the faceplate 14a, the faceplate 14b, the adhesion portions 34, and a filling member 26. The panel structure 10K is different from the panel structure 10B shown in Fig. 5 in that the adhesion portions 34 are provided instead of the fusing portions 16 and that the filling member 26 is provided.

The adhesion portions 34 join the core member 12B and the faceplate 14a on one surface of the core member 12B. The adhesion portion 34 is formed between a top portion of the corrugated portion 22 and the one surface of the faceplate 14a. The adhesion portion 34 is selectively formed between each of the top portions of the plurality of corrugated portions 22 and the one surface of the faceplate 14a. The adhesion portion 34 is selectively formed between each of the top portions of the plurality of corrugated portions 22 and the one surface of the faceplate 14a, for example, depending on stiffness and impact resistance required for the panel structure 10K. The adhesion portion 34 can be formed, for example, by bonding and drying the corrugated portion 22 and the faceplate 14a using an adhesive agent for a resin. As the adhesive agent for a resin, a well-known adhesive agent may be used.

The adhesion portions 34 join the core member 12B and the faceplate 14b on the other surface of the core member 12B. The adhesion portion 34 is formed between the top portion of the corrugated portion 22 and the one surface of the faceplate 14b. The adhesion portion 34 is selectively formed between each of the top portions of the plurality of corrugated portions 22 and the one surface of the faceplate 14b. The adhesion portion 34 is selectively formed between each of the top portions of the plurality of corrugated portions 22 and the one surface of the faceplate 14b, for example, depending on stiffness and impact resistance required for the panel structure 10K. The adhesion portion 34 can be formed by bonding and drying the corrugated portion 22 and the faceplate 14b using an adhesive agent for a resin.

One example of a method of disposing the filling member 26 between the core member 12B and each of the faceplate 14a and the faceplate 14b will be described. For example, before bonding the core member 12B and each of the faceplate 14a and the faceplate 14b using the adhesive agent, the filling member 26 is shaped in a predetermined shape and is disposed in a space between the core member 12B and each of the faceplate 14a and the faceplate 14b. The filling member 26 is fused by joining the core member 12B and each of the faceplate 14a and the faceplate 14b using the adhesion portions 34 and subsequently heating the components using a heat source (not shown). Thus, the filling member 26 adheres to the core member 12B and the faceplate 14a and the faceplate 14b. As a result, the filling member 26 is disposed between the core member 12B and each of the faceplate 14a and the faceplate 14b.

The panel structure 10K according to the tenth embodiment includes the filling member 26 between the core member 12B and each of the faceplate 14a and the faceplate 14b that are joined using the adhesion portions 34. As a result, in the tenth embodiment, the heat insulating properties of the panel structure 10K joined using the adhesive agent can be improved.

In the tenth embodiment, in order to improve the heat insulating properties of the panel structure 10K, instead of the filling member 26, the flow path 28 shown in Fig. 11 through which the fluid flows is formed between the core member 12B and each of the faceplate 14a and the faceplate 14b.

### [Eleventh Embodiment]

A configuration of a panel structure according to an eleventh embodiment will be described using Fig. 16. Fig. 16 is a diagram schematically showing a cross-section of the panel structure according to the eleventh embodiment.

As shown in Fig. 16, a panel structure 10L according to the eleventh embodiment includes the core member 12B, the faceplate 14a, the faceplate 14b, the adhesion portions 34, and the sound absorbing member 32. The panel structure 10L is different from the panel structure 10K shown in Fig. 15 in that the sound absorbing member 32 is provided instead of the filling member 26.

The sound absorbing member 32 is disposed between the core member 12B and each of the faceplate 14a and the faceplate 14b that are joined using the adhesion portions 34. The sound absorbing member 32 may be selectively disposed between the core member 12B and each of the faceplate 14a and the faceplate 14b. The sound absorbing member 32 can be formed of, for example, any member that exhibits a sound absorbing effect.

The panel structure 10L according to the eleventh embodiment includes the sound absorbing member 32 between the core member 12B and each of the faceplate 14a and the faceplate 14b that are joined using the adhesion portions 34. As a result, in the eleventh embodiment, sound insulating properties can be improved.

In the eleventh embodiment, in order to improve the sound insulating properties of the panel structure 10L, instead of the sound absorbing member 32, the hole portion 30 shown in Fig. 13 may be formed in at least one of the core member 12B, the faceplate 14a, or the faceplate 14b.

In addition, the present disclosure is not limited to the aspects shown in the tenth embodiment and the eleventh embodiment, and each of the core members and each of the faceplates shown in the first to ninth embodiments may be bonded using an adhesive agent for a resin instead of the fusion.

### [Effects]

The panel structure according to the embodiment is grasped, for example, as follows.

A panel structure according to a first aspect includes: a sheet-shaped core member 12 that has a thermoplastic property and includes a plurality of protruding portions 18 on at least one surface; a sheet-shaped faceplate 14 that is disposed on the plurality of protruding portions 18 and has a thermoplastic property; and a fusing portion 16 that is selectively formed between the core member 12 and the plurality of protruding portions 18 and joins the core member 12 and the faceplate 14 to each other.

In the panel structure according to the first aspect, the core member 12 and the faceplate 14 are joined using the fusing portion 16 formed by heat fusion. As a result, in the panel structure according to the first aspect, the reliability of joining between the core member 12 and the faceplate 14 can be improved. In the panel structure according to the first aspect, the core member 12 and the faceplate 14 are joined through the fusing portion 16. As a result, a joining member such as a bolt is unnecessary, and an increase in weight can be suppressed.

In a panel structure according to a second aspect, the protruding portion 18 is formed on both surfaces of the core member 12. As a result, in the panel structure according to the second aspect, the reliability of joining between the core member 12 and the faceplate 14 on both of the surfaces of the core member 12 can be improved.

In a panel structure according to a third aspect, the protruding portion 18 is a continuous corrugated portion 22 that is formed on the surface of the core member 12. As a result, in the panel structure according to the third aspect, when the shape of the core member 12 is a corrugated shape, the reliability of joining between the core member 12 and the faceplate 14 can be improved.

A panel structure according to a fourth aspect further includes a metal thin film that is formed on at least one surface of the faceplate 14. As a result, in the panel structure according to the fourth aspect, heat of radiation can be reduced.

A panel structure according to a fifth aspect further includes a filling member 26 that is disposed in a space between the core member 12 and the faceplate 14. As a result, in the panel structure according to the fifth aspect, heat insulating properties can be improved. In addition, in the panel structure according to the fifth aspect, sound insulating properties can be improved.

In a panel structure according to a sixth aspect, a plurality of the core members 12 are provided. As a result, in the panel structure according to the sixth aspect, the number of air layers can be increased. As a result, in the panel structure according to the sixth aspect, heat insulating properties can be improved. In addition, in the panel structure according to the sixth aspect, sound insulating properties can be improved.

A panel structure according to a seventh aspect further includes a flow path 28 through which a fluid flows between the core member 12 and the faceplate 14. As a result, the inside of the panel structure according to the seventh aspect can be cooled. As a result, in the panel structure according to the seventh aspect, heat insulating properties can be improved. In addition, in the panel structure according to the seventh aspect, by appropriately adjusting the temperature of the fluid, the temperature of the interior of a vehicle or the like can be cooled or heated.

In a panel structure according to an eighth aspect, the fluid is a liquid or a gas. As a result, the inside of the panel structure according to the eighth aspect can be easily cooled using any fluid. As a result, in the panel structure according to the eighth aspect, heat insulating properties can be easily improved. In addition, in the panel structure according to the eighth aspect, the temperature of the interior of a vehicle or the like can be cooled or heated using any fluid.

A panel structure according to a ninth aspect further includes a hole portion 30 that is selectively formed in at least one of the core member 12 or the faceplate 14. As a result, in the panel structure according to the ninth aspect, a sound can be resonated. As a result, in the panel structure according to the ninth aspect, noise generated from one side of the faceplate 14 can be prevented from propagating to another side of the faceplate 14, and sound insulating properties can be improved.

In a panel structure according to a tenth aspect, the faceplate 14 is formed of a porous resin or a resin including a non-woven carbon fiber. As a result, in the panel structure according to the tenth aspect, a sound can be resonated. As a result, in the panel structure according to the tenth aspect, sound insulating properties can be improved.

Hereinabove, the embodiments of the present disclosure have been described. However, the present disclosure is not limited to the contents of the embodiments. In addition, the above-described components include components that can be easily conceived by those skilled in the art, components substantially the same as the components, and components within a range of so-called equivalents. Further, the above-described components can be appropriately combined with each other. Further, various omissions, substitutions, or changes can be made for the components within a range not departing from the scope of the embodiments.

### Reference Signs List

10: panel structure
12: core member
14: faceplate
16: fusing portion
18: protruding portion
20: recessed portion
22: corrugated portion
24: metal thin film
26: filling member
28: flow path
30: hole portion
32: sound absorbing member
34: adhesion portion

## Claims

1. A panel structure comprising:
a sheet-shaped core member that has a thermoplastic property and includes a plurality of protruding portions on at least one surface;
a sheet-shaped faceplate that is disposed on the plurality of protruding portions and has a thermoplastic property; and
a fusing portion that is selectively formed between the faceplate and the plurality of protruding portions and joins the core member and the faceplate to each other.

2. The panel structure according to claim 1,
wherein the protruding portion is formed on both surfaces of the core member.

3. The panel structure according to claim 1 or 2,
wherein the protruding portion is a continuous corrugated portion that is formed on the surface of the core member.

4. The panel structure according to any one of claims 1 to 3, further comprising a metal thin film that is formed on at least one surface of the faceplate.

5. The panel structure according to any one of claims 1 to 4, further comprising a filling member that is disposed in a space between the core member and the faceplate.

6. The panel structure according to any one of claims 1 to 5, wherein a plurality of the core members are provided.

7. The panel structure according to any one of claims 1 to 6, further comprising a flow path through which a fluid flows between the core member and the faceplate.

8. The panel structure according to claim 7,
wherein the fluid is a liquid or a gas.

9. The panel structure according to any one of claims 1 to 8, further comprising a hole portion that is selectively formed in at least one of the core member or the faceplate.

10. The panel structure according to any one of claims 1 to 9,
wherein the faceplate is formed of a porous resin or a resin including a non-woven carbon fiber.

11. The panel structure according to any one of claims 1 to 10, further comprising a sound absorbing member that is disposed between the core member and the faceplate.
